# EUROPEAN PATENT APPLICATION

(11) **EP 4 782 733 A1**
(43) Date of publication of application: **29.07.2026**
(21) Application number: 24866613.3
(22) Date of filing: 18.07.2024
(51) Int. Cl.: F16K 31/04, F16K 37/00

(54) **ELECTRIC VALVE**

(30) Priority: 19.09.2023 JP 2023150780
(71) Applicant: Fujikoki Corporation, Tokyo 158-0082 (JP)
(72) Inventor: ARAI Yusuke, Tokyo 158-0082 (JP)
(74) Representative: Ter Meer Steinmeister & Partner
(86) International application number: PCT/JP2024/025844
(87) International publication number: WO 2025/062808

(57) **Abstract**

An electrically operated valve includes a valve main body having a valve chamber in an inner part, a first flow passage communicating with the valve chamber, a second flow passage communicating with the valve chamber, an orifice formed between the first flow passage and the second flow passage, a valve body changing an opening degree of the orifice by moving forward and backward with respect to the orifice, a rotor constructing an electric motor driving the valve body, a gear device reducing the rotation of the rotor, an output shaft outputting the rotation reduced by the gear device, a transmission mechanism converting the rotation of the output shaft into linear motion to transmit to the valve body, a tubular gear case receiving the gear device, and a guide part rotatably supporting the output shaft. The output shaft, the guide part and the gear device are supported to the gear case.

## Description

### TECHNICAL FIELD

The present invention relates to an electrically operated valve, and more particularly relates to the structure of a gear part which reduces the rotation of an electric motor.

### BACKGROUND ART

An electrically operated valve controlling an opening degree of a valve with the use of an electric motor such as a stepping motor has been conventionally used in a refrigeration cycle apparatus which is provided with a refrigerant circuit such as an air conditioner, a refrigerating device and a freezing device. As one of the electrically operated valve mentioned above, there is a gear type electrically operated valve which is provided with a gear device reducing the rotation of the electric motor.

The electrically operated valve mentioned above is provided with an electric motor which drives a valve body, a gear device which reduces the rotation of the electric motor, an output shaft which outputs the rotation reduced by the gear device, and a transmission mechanism which converts the rotation of the output shaft into a linear motion to transmit to the valve body, and controls a flow rate of a fluid by moving the valve body forward and backward with respect to an orifice formed on a flow passage.

Further, the following patent literature 1 is provided as a literature disclosing the invention relating to the gear type electrically operated valve as mentioned above.

### CITATION LIST

### PATENT LITERATURE

Patent Literature 1: Japanese Unexamined Patent Application Publication No. 2009-228889

### SUMMARY OF INVENTION

In the meantime, the invention described in the patent literature 1 mentioned above is configured to improve ease of assembly of the electrically operated valve and enhance the reliability of the electrically operated valve by allowing a rotation test and an evaluation. However, there is still room for further improvement in these regards.

In particular, in the invention described in the patent literature 1 mentioned above, the ease of assembly when manufacturing is improved by previously producing a gear assembly (a gear module) obtained by unitizing gears constructing a gear device, and assembling it in the electrically operated valve.

However, all the gears constructing the gear device are not assembled in the gear assembly, and a work for assembling further gear (sun gear) is required when manufacturing.

Further, regarding the improvement of reliability, the electrically operated valve described in the patent literature 1 is not provided with all the gears of the gear device as mentioned above, and the output shaft outputting the rotation reduced by the gear device is provided, but is not supported by the guide part. Thus, it is impossible to perform tests such as an operation check and measurement and check of reduction ratio for all the gear device in the gear assembly state.

Therefore, an object of the present invention exists in a point of allowing further enhancement of the reliability in the electrically operated valve by further improving the ease of assembly of the gear type electrically operated valve and allowing the test for a whole of the gear device.

In order to solve the problem mentioned above and achieve the object, an electrically operated valve according to the present invention is provided with a valve main body which has a valve chamber in an inner part, a first flow passage which communicates with the valve chamber, a second flow passage which communicates with the valve chamber, an orifice which is formed between the first flow passage and the second flow passage, a valve body which changes an opening degree of the orifice by moving forward and backward with respect to the orifice, a rotor which constructs an electric motor driving the valve body, a gear device which reduces the rotation of the rotor, an output shaft which outputs the rotation reduced by the gear device, a transmission mechanism which converts the rotation of the output shaft into a linear motion to transmit to the valve body, a tubular gear case which receives the gear device, and a guide part which rotatably supports the output shaft, wherein the output shaft, the guide part and the gear device are supported to the gear case.

In the conventional gear type electrically operated valve including the electrically operated valve according to the invention described in the patent literature 1 mentioned above, the gear assembly is provided with the output shaft which outputs the rotation reduced by the gear device, however, the guide part supporting the output shaft is disposed in the transmission mechanism side. In particular, the transmission mechanism is formed by a feed screw (a screw mechanism) constructed by a male screw member (a screw shaft, which is called as "screw drive member" in the present invention) which is connected to the output shaft so as to be movable in an axial direction, and a bearing (which is called as "bearing member" in the present invention) having a female screw part which is screwed into the male screw member, and the output shaft is supported by rotatably fitting the output shaft into an upper part of the bearing. Therefore, in the conventional electrically operated valve, the inspection such as the operation check and the measurement of the reduction ratio can not be performed by the gear device single body (without combination with the transmission mechanism, same applies to the following description).

In contrast to this, in the electrically operated valve according to the present invention, the guide part is supported by the gear case independently from the transmission mechanism (the bearing) in place of the guide part of the output shaft being disposed in the bearing such as the conventional structure. Thus, it is possible to perform various kinds of tests and inspections such as the operation test by the gear device single body, and it is possible to further improve the reliability of the electrically operated valve. Further, it is possible to improve the ease of assembly of the electrically operated valve in comparison with the conventional structure since the gear device (all the necessary gears) is disposed within the gear case.

Further, in conventional, the bearing of the transmission mechanism has been generally made of metal in a point of securing the durability, and the guide part of the output shaft integrated therewith has been necessarily made of metal. On the contrary, according to the present invention, the guide part of the output shaft is provided independently from the transmission mechanism (the bearing member). Therefore, it is possible to form the guide part, for example, by a sliding resin (resin having a high sliding performance) while making the bearing member by the metal to secure the durability, and it is also possible to reduce a sliding resistance of the guide part. Further, the support part of the output shaft can be formed as a greaseless structure by employing the sliding resin. The guide part can be disposed within the gear case, for example, by an insert molding.

Further, according to a typical aspect of the present invention, the gear device, the gear case, the output shaft, the guide part and the rotor are unitized as a gear device assembly. The term "unitization" means constructing as one integrated unit (aggregate of parts) which is constructed by a plurality of parts and can be assembled in the electrically operated valve. Further, the gear device assembly may include a center shaft which rotatably supports the rotor, and a support member which supports the center shaft in a can, such as an embodiment mentioned later.

The gear device can be constructed by a paradox planetary gear mechanism such as the embodiment mentioned later. The gear device according to the present invention is not limited to the paradox planetary gear mechanism, but can be constructed by the other planetary gear mechanism or the other gear mechanisms than the planetary gear mechanism.

In the electrically operated valve according to the present invention, an engagement concave part is preferably disposed in one of an inner peripheral surface of the gear case and an outer peripheral surface of the guide part, and an engagement convex part fitted into the engagement concave part to block the rotation of the guide part is preferably disposed in the other of the inner peripheral surface of the gear case and the outer peripheral surface of the guide part. This structure is provided for preventing the guide part from dropping out from the gear case and preventing the guide part from rotating together with the output shaft. More specifically, the engagement concave part and the engagement convex part perform together a function for preventing the guide part from moving (displacing) in the axial direction of the gear case and rotating.

The element "engagement concave part" corresponds to a part which is recessed with respect to the other end (in other words, as seen from the other end) (the guide part in a case where it is disposed in the gear case side, and the gear case in a case where it is disposed in the guide part side). On the other hand, the element "engagement convex part" corresponds to a part which is protruded out of the other end (in other words, as seen from the other end) (the guide part in a case where it is disposed in the gear case side, and the gear case in a case where it is disposed in the guide part side).

Further, according to the present invention which is provided with the guide part independently from the transmission mechanism (the bearing member), a space can be provided between the gear device (the gear case and the output shaft) and the transmission mechanism. Therefore, the electrically operated valve according to a preferable aspect of the present invention is provided with a rotation detecting means which detects the rotation of the screw drive member with the use of the space.

In particular, in the electrically operated valve according to this aspect, the transmission mechanism includes a screw drive member which rotates due to the rotation of the output shaft, is provided in such a manner as to be movable forward and backward with respect to the output shaft and has a male screw part on an outer peripheral surface, and a bearing member which has a female screw part screwed into the male screw part of the screw drive member, and the electrically operated valve is further provided with a driving permanent magnet which is received in a lower part of the gear case, is fixed to the screw drive member and rotates together with the screw drive member, a driven permanent magnet which is connected to the driving permanent magnet by a magnetic coupling and is arranged in an outer side of a lower part outer peripheral surface of the gear case such that a rotative force is transmitted from the driving permanent magnet, and a magnetic sensor which detects the rotation of the driven permanent magnet.

The screw drive member constructing the transmission mechanism is connected to the output shaft so as to be slidable in the axial direction for achieving a function for serving as a feed screw (a function for converting the rotation applied from the output shaft into the linear motion). For this purpose, a fixed gap (a gap for achieving a relative displacement) is required between the output shaft and the screw drive member. Therefore, in order to detect a more accurate position (a displacement in the axial direction) of the valve body, it is more desirable to detect the rotation of the screw drive member than detecting the rotation of the rotor and the output shaft. However, in the conventional valve structure, the guide part supporting the output shaft is disposed in the transmission mechanism (the bearing) side as mentioned above. Then, it was hard in terms of space to detect the rotation of the screw drive member arranged in an inner part of the bearing. On the contrary, according to the aspect mentioned above of the present invention, it is possible to more accurately detect the displacement of the valve body (an opening degree of the valve) by detecting the rotation of the screw drive member.

According to the present invention, it is possible to further improve the ease of assembly and the reliability of the gear type electrically operated valve.

The other objects, features and advantages of the present invention are apparent from the following description of embodiments according to the present invention which is given on the basis of the accompanying drawings. It is apparent for a person skilled in the art that the present invention is not limited to the following embodiments, but can be variously changed within the scope of the invention described in claims. Further, in each of the drawings, same reference numerals denote the same or corresponding portions.

### BRIEF DESCRIPTION OF DRAWINGS

Fig. 1 is a vertical cross sectional view showing an electrically operated valve (in a valve closed state) according to a first embodiment of the present invention.
Fig. 2 is a gear device assembly of the electrically operated valve according to the first embodiment in an enlarged manner.
Fig. 3 is a partial transverse cross sectional view (a cross sectional view as seen from an arrow B-B in Fig. 2) of a lower part of the gear device assembly.
Fig. 4 is a vertical cross sectional view showing the electrically operated valve (in a valve opened state) according to the first embodiment.
Fig. 5 is a vertical cross sectional view showing an electrically operated valve (in a valve closed state) according to a second embodiment of the present invention.
Fig. 6 is a view showing a rotation detecting part (a part C in Fig. 5) of the electrically operated valve according to the second embodiment in an enlarged manner.
Fig. 7 is a plan view (a view as seen from the above) showing the rotation detecting part (a driving permanent magnet, a driven permanent magnet and a magnetic sensor) of the electrically operated valve according to the second embodiment.
Fig. 8 is a vertical cross sectional view showing the electrically operated valve (in a valve opened state) according to the second embodiment.

### DESCRIPTION OF EMBODIMENTS

### [First Embodiment]

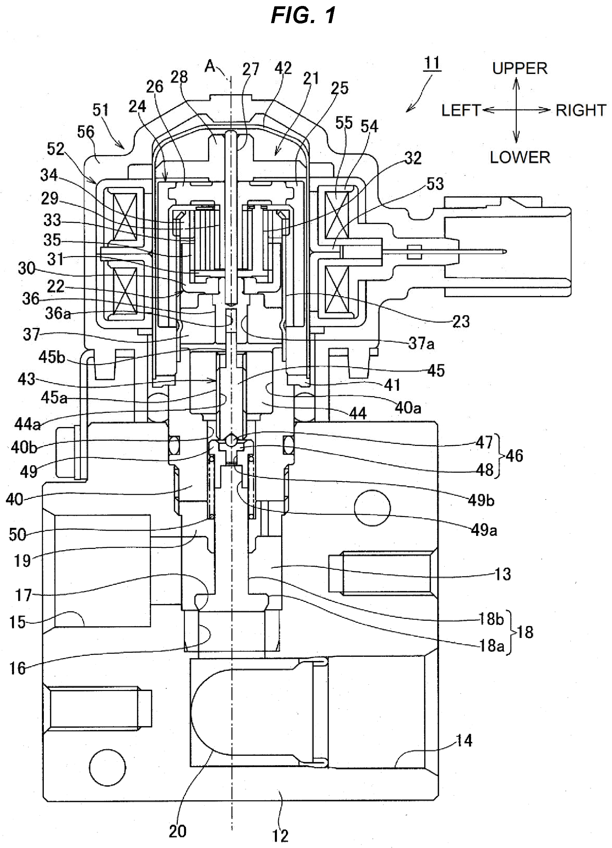

A description will be given of an electrically operated valve according to a first embodiment of the present invention with reference to Figs. 1 to 4. Each of the drawings appropriately shows two-dimensional coordinates which represent an up-and-down direction and a lateral direction and are orthogonal to each other, and the following description will be given on the basis of these directions. However, the electrically operated valve according to the present invention and the present embodiment (same applies to a second embodiment mentioned later) can be used in various directions, each of the directions are provided for convenience, and structures of respective parts of the present invention are not limited by these directions.

As shown in Figs. 1 to 4, an electrically operated valve 11 according to the present embodiment is an electrically operated valve which is preferably used for regulating a flow rate of a refrigerant in a refrigeration cycle apparatus such as a heat pump type cooling and heating system, and is provided with a valve main body 12 which has a valve chamber 13 in an inner part and has an inflow passage (a first flow passage) 14 for allowing the refrigerant to flow into the valve chamber 13 and an outflow passage (a second flow passage) 15 for allowing the refrigerant to flow out of the valve chamber 13, an orifice (a valve port) 16 which is formed between the inflow passage 14 and the valve chamber 13 (in an opening part to the valve chamber 13 in the inflow passage 14), a valve body 18 which changes an opening degree of the orifice 16 by moving forward and backward (moving up and down) with respect to the orifice 16, a valve body support member 19 which is provided in such a manner as to close an upper surface of the valve chamber 13 and supports the valve body 18 to be slidable up and down, an electric motor 51 which drives the valve body 18, a gear device 22 which reduces the rotation generated by the electric motor 51, an output shaft 36 which outputs the rotation reduced by the gear device 22, an output shaft guide member (hereinafter, refer simply to as "guide member") 37 which supports the output shaft 36 so as to be rotatable and slidable, a transmission mechanism 43 which converts the rotation of the output shaft 37 into a linear motion by the feed screw mechanism to transmit to the valve body 18, a cylindrical gear case 23 which receives the gear device 22, a connection member 40 which connects the electric motor 51 and the valve main body 12, and a can (a sealed container) 42 which is covered and not bottomed (is opened in a bottom surface and is closed in a top surface), has a cylindrical shape and forms a sealed space in an upper surface of the valve main body 12 together with the connection member 40.

A valve seat 17 which the valve body 18 comes into contact with and separated from is formed in the valve chamber side end part of the orifice 16. Further, the inflow passage 14 is provided in an inner part with a mesh-shaped strainer 20 which allows the refrigerant to pass through and can capture the foreign matter.

The electric motor 51 is a stepping motor provided with a stator 52 which is arranged in an outer side of the can 42, and a rotor (a magnet rotor) 24 which is arranged rotatably in an inner side of the can 42.

The stator 52 arranged in the outer side of the can 42 includes a yoke (a stator yoke) 53, a coil 55 in which a winding wire is applied to a bobbin 54, and a molded cover 56 made of resin. Further, the rotor 24 arranged in the inner side of the can 42 is constructed by integrally connecting a cylindrical rotor member 25 which is produced by a magnetic material (a permanent magnet), and a sun gear member 26 which is produced by a resin material.

A center shaft 27 is inserted into a center part of the sun gear member 26, and an upper part of the center shaft 27 is supported by a support member 28 which is arranged in an inner side of a top part of the can 42.

A sun gear 29 of the sun gear member 26 engages with a plurality of planetary gears 33 which are rotatably supported to a shaft 52 disposed in a carrier 31 mounted on a bottom surface of an output gear 30. An upper part of the planetary gear 33 engages with an annular ring gear (an internal tooth fixing gear) 34 which is attached to an upper part of the gear case 23 fixed to an upper part of the connection member 40, and a lower part of the planetary gear 33 engages with an internal tooth gear 35 of the annular output gear 30. The number of teeth of the ring gear 34 and the number of teeth of the internal tooth gear 35 of the output gear 30 are set to be slightly different number of teeth. As a result, the rotating speed of the sun gear 29 is decelerated with a great reduction ratio to be transmitted to the output gear 30. These gear mechanisms (the sun gear 29, the planetary gear 33, the ring gear 34 and the output gear 30) form a paradox planetary gear speed reduction mechanism, and construct the gear device 22 which decelerates the rotation of the electric motor 51 mentioned above.

An upper part of a stepped cylindrical output shaft 36 is press fitted to the center of a bottom part of the output gear 30, thereby connecting the output gear 30 and the output shaft 36.

On the other hand, the gear case 23 is provided in an inside bottom part with a guide member (a guide part in the present invention) 37 which supports the output shaft 36. The guide member 37 has a through hole 37a in a center part, and a lower part of the output shaft 36 is held within the through hole 37a so as to be slidable and rotatable. Further, the output gear 30 slidably comes into contact with an upper surface of the guide member 37. In order to make a sliding resistance of the output gear 30 and the output shaft 36 small, the guide member 37 is formed by a sliding resin (for example, PTFE, polytetrafluoroethylene or polytetrafluoroethylene). Further, a lower end part of the center shaft 27 is fitted to an upper part of the output shaft 36 such that the rotation of the output shaft 36 is not prevented.

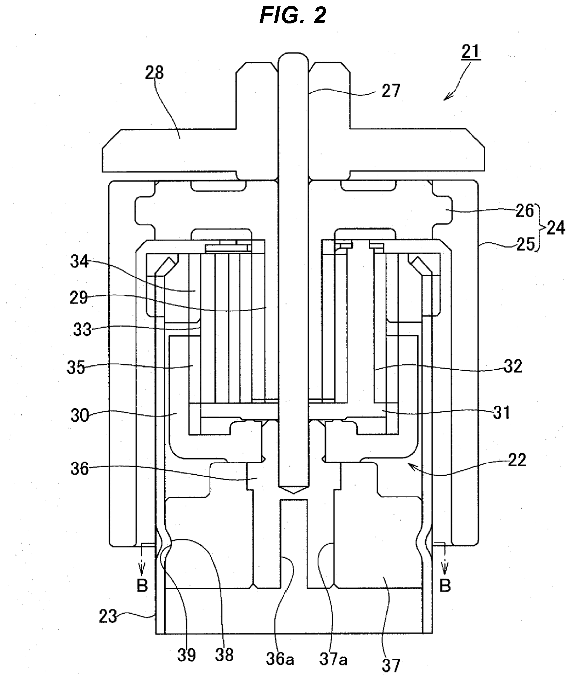

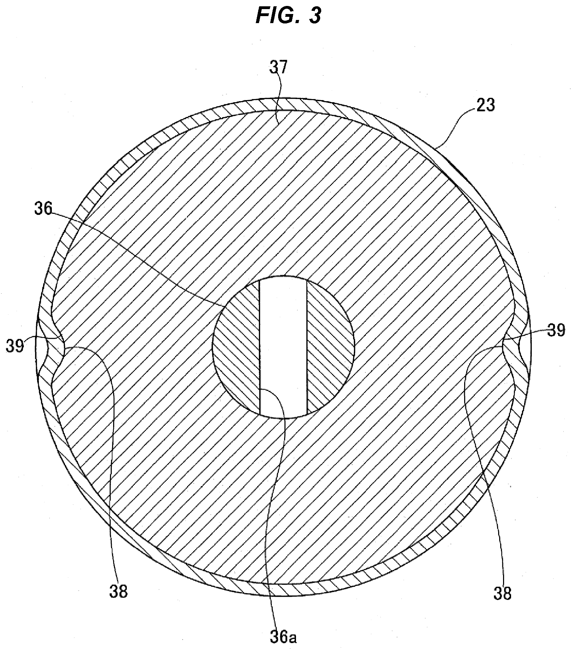

Further, in order to prevent the guide member 37 from dropping out from the gear case 23 and prevent the guide member 37 from rotating in association with the rotation of the output shaft 36, a fitting structure is formed in the gear case 23 and the guide member 37. In particular, in the fitting structure, a convex part (an engagement convex part) 38 protruding toward the center of the gear case 23 is formed in the gear case 23 by recessing a peripheral wall of the gear case 23 to an inner side, and a concave part (an engagement concave part) 39 to which the convex part 38 is fitted is formed in an outer peripheral surface of the guide member 37 (refer to Figs. 2 and 3). One set of fitting structure (a set of the convex part 38 and the concave part 39) is provided at each of opposite positions in a diametrical direction and totally two sets are provided in the present embodiment. However, the number of the set of the fitting structure may be one or three or more.

Further, the guide member 37 may be fixed to the gear case 23 by insert molding. In the insert molding, a resin material making the guide member 37 is introduced into a metal mold in which the gear case 23 made of metal is arranged in an inner part to form. As a result, the convex part is formed in one of the gear case 23 and the guide member 37, and the concave part is formed in the other of the gear case 23 and the guide member 37. Further, a concave part or a through hole may be provided in the gear case 23 and the guide member 37 may be insert molded. In this case, a part of the guide member 37 enters the concave part or the through hole to be fixed.

Further, when manufacturing the electrically operated valve 11 according to the present embodiment (same applies to a second embodiment mentioned later), the gear device 22, the gear case 23, the output shaft 36, the guide member 37, the rotor 24, the center shaft 27 and the support member 28 are unitized as a gear device assembly 21. Fig. 2 shows the unitized gear device assembly (which may be also called as "assembly" in the present application) 21 in an enlarged manner. It is possible to improve a productivity of the electrically operated valve 11 by producing the unitized assembly 21 as mentioned above. For example, if plural kinds of assemblies 21 having different gear ratios are produced and prepared, it is possible to immediately deal with a specification change in correspondence to a load in the valve body side by selecting among them. Further, the assembly 21 can be assembled in multiple kinds of valve main bodies 12 which are different in a screw pitch of a feed screw mechanism 43 mentioned later and a valve port diameter.

Further, the assembly 21 includes all the gears and is provided with the guide member 37 which supports the output shaft 36. As a result, it is possible to perform the test and inspection such as the operation test and the performance inspection of the gear part reducing the rotation of the electric motor 51, and it is possible to further improve the reliability of the electrically operated valve 11.

The connection member 40 connecting the electric motor 51 and the valve main body 12 is a tubular member having a large-diameter hole 40a and a small-diameter hole 40b which correspond to through holes communicating with each other. The large-diameter hole 40a passes through a center part in an upper part of the connection member 40 and has a large diameter so as to allow a bearing member 44 mentioned later to fit to and insert into from the above. The small-diameter hole 40b passes through a center part in a lower part of the connection member 40 and has a small diameter. Further, the can 42 is joined to an outer peripheral surface of an upper end part of the connection member 40 via a ring-shaped base plate 41.

The bearing member 44 is fitted and inserted into the large-diameter hole 40a in the upper part of the connection member 40 to be fixed. The bearing member 44 is a cylindrical member which has a center hole passing through in the up-and-down direction, and a female screw (a female screw part) 44a is formed in an inner peripheral surface of the center hole. Further, a screw drive member 45 is disposed within the center hole of the bearing member 44. A male screw (a male screw part) 45a screwed into the female screw part 44a of the bearing member 44 is formed in an outer peripheral surface of the screw drive member 45. The male screw part 45a (the screw drive member 45) and the female screw part 44a (the bearing member 44) construct the feed screw mechanism mentioned above, that is, the transmission mechanism 43 which converts the rotary motion supplied from the stepping motor 51 via the gear device 22 into the linear motion toward the up-and-down direction to transmit to the valve body 18.

Here, the output gear 30 performs a rotary motion at a fixed position in the up-and-down direction without moving up and down, and the rotary motion of the output gear 30 is transmitted to the screw drive member 45 side by inserting a plate-like part 45b which is disposed in the upper end part of the screw drive member 45 and has a flat driver shape into a fitting groove 36a which is disposed in the lower end part of the output shaft 36 connected to the output gear 30 and has a slit shape. The plate-like part 45b disposed in the screw drive member 45 slides in the up-and-down direction within the fitting groove 36a of the output shaft 36. As a result, when the output gear 30 (the rotor 24) rotates, the screw drive member 45 linearly moves in the up-and-down direction by the transmission mechanism (the feed screw mechanism) 43 despite that the output gear 30 does not move in the up-and-down direction.

The linear motion of the screw drive member 45 is transmitted to the valve body 18 via a ball-like joint 46 which is constructed by a ball 47 and a ball receiving seat 48, and a spring receiving member 49. The valve body 18 is constructed by a valve body main body part 18a which comes into contact with and separates from the valve seat 17, and a stepped columnar valve shaft part 18b which rises upward from a center part of an upper surface of the valve body main body part 18a. The spring receiving member 49 and the valve body 18 (the valve shaft part 18b) are connected by fitting and inserting the upper end part of the valve shaft part 18b to a fitting hole (a lower surface fitting hole) 49a which is formed in a center part of a lower surface of the spring receiving member 49. Further, a fitting hole (an upper surface fitting hole) 49b is also provided in a center part of an upper surface of the spring receiving member 49, and the ball receiving seat 48 is fitted into the upper surface side fitting hole 49b. Further the spring receiving member 49 is fitted to and inserted into the small-diameter hole 40b of the connection member 40 so as to be movable up and down.

Further, the valve body support member 19 and the connection member 40 are fixed to the upper surface opening of the valve main body 12 by being successively screwed, thereby closing the upper surface opening in the upper part of the valve chamber. The valve shaft part 18b is passed through a center part of the valve body support member 19 fixed to the upper part of the valve chamber 13 so as to be slidable up and down, and a stepped through hole for placing a compression coil spring 50 is formed. Further, the compression coil spring 50 is disposed between a step part in an upper part of the through hole and the spring receiving member 49. The compression coil spring 50 is configured to energize the valve body 18 to an upper side (a valve opening direction) via the spring receiving member 49. Thus, even when the screw drive member 45 moves upward, the screw drive member 45 and the valve body 18 being in contact with each other via the ball-like joint 46 do not separate, and the screw drive member 45 and the valve body 18 are integrated in the up-and-down direction. Further, an energizing force of the compression coil spring 50 is applied to the valve body 18 in addition to the drive force of the electric motor 51 when opening the valve. Thus, it is possible to more securely perform the valve opening motion.

The screw drive member 45 in the drive part side rotates and slides around a center axis A with respect to the valve body 18 via the ball 47, and the rotation of the screw drive member 45 is not transmitted to the valve body 18. Further, in the present embodiment, the valve body 18, the spring receiving member 49, the ball joint 46 (the ball 47 and the ball receiving seat 48), the screw drive member 45, the bearing member 44, the output shaft 36, the center shaft 27, the guide member 37, the orifice 16 (the valve seat 17), the valve body support member 19, the connection member 40, and the rotor 24 are coaxially arranged, and the center axes A thereof coincide with an axis of rotation (a center axis) A of the rotor 24.

A description will be given of the motion of the electrically operated valve according to the present embodiment as follows.

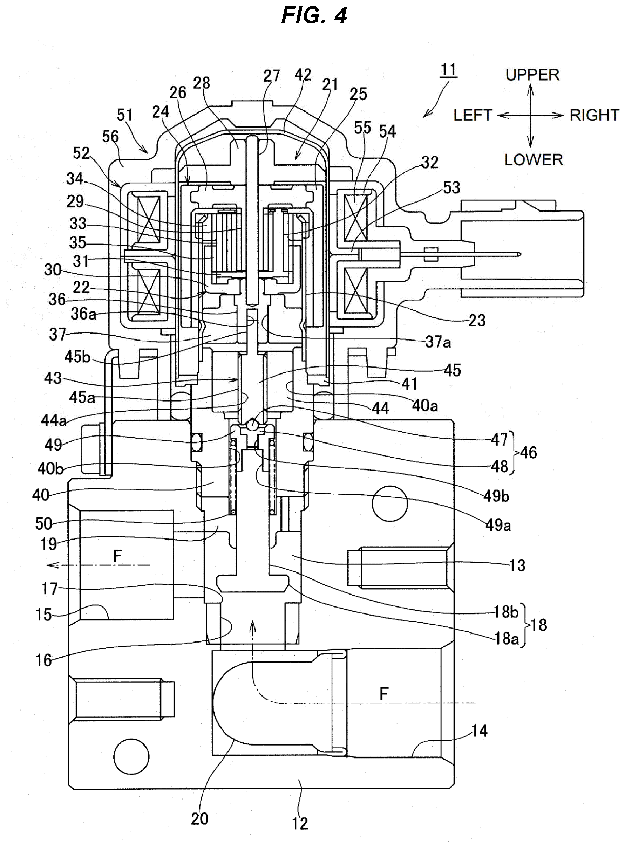

When an electric current is supplied to the stator 52 (the coil 55) in such a manner that the rotor 24 rotates in one direction from the valve closed state shown in Fig. 1, the rotation of the rotor 24 is converted into the linear motion by the transmission mechanism 43, and the screw drive member 45 is pulled upward. In association therewith, the spring receiving member 49 pressed against the lower surface of the screw drive member 45 via the ball-like joint 46 by the energizing force of the compression coil spring 50, and the valve shaft part 18b connected to the spring receiving member 49 are pulled upward, and the valve shaft part 18b is separated from the valve seat 17, so that the orifice 16 is opened, and the refrigerant flowing into from the inflow passage 14 flows out of the outflow passage 15 through the valve chamber 13 (refer to an arrow F in Fig. 4). The passing amount (the flow rate) of the refrigerant in this valve opened state can be adjusted by the amount of rotation of the rotor 24.

On the contrary, when the electric current is supplied to the stator 52 (the coil 55) in such a manner that the rotor 24 rotates in a reverse direction to the one direction from the valve opened state, the rotation of the rotor 24 is converted into the linear motion by the transmission mechanism 43, and the screw drive member 45 moves downward. In association with this downward moving motion, the ball-like joint 46, the spring receiving member 49 and the valve body 18 move downward. When the valve body main body part 18a comes into contact with the valve seat 17, the orifice 17 is closed, so that the flow passage between the inflow passage 14 and the outflow passage 15 is blocked, thereby forming the valve closed state (refer to Fig. 1).

### [Second Embodiment]

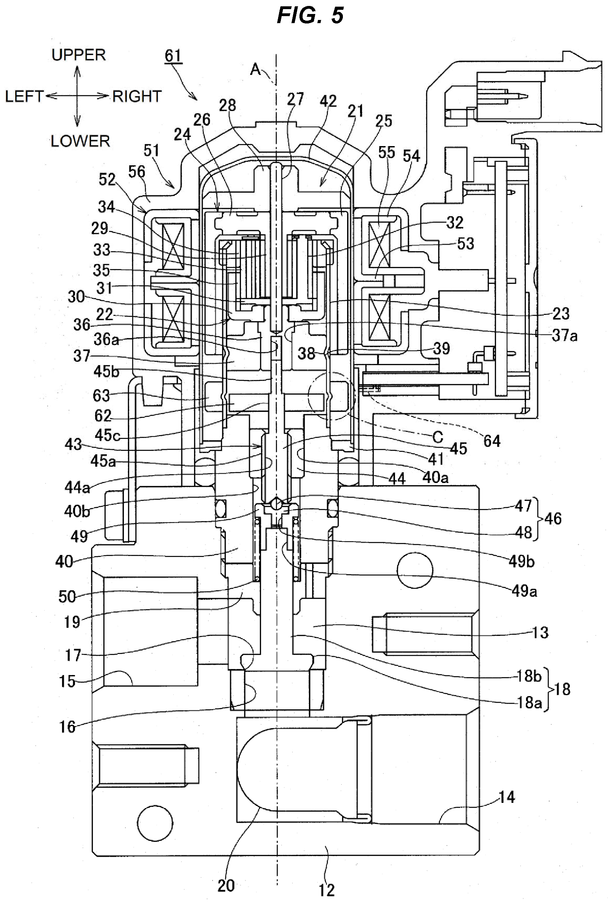

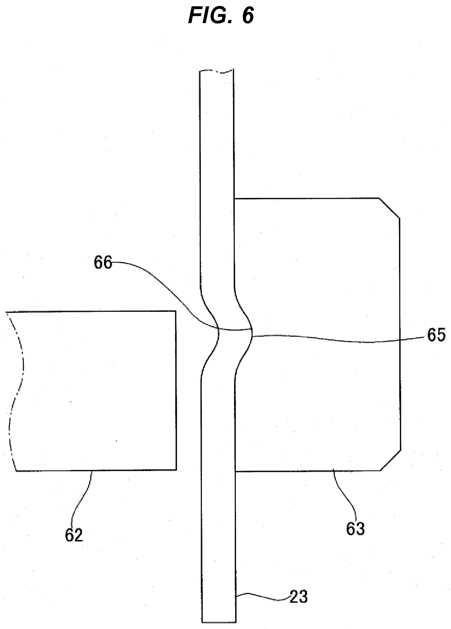

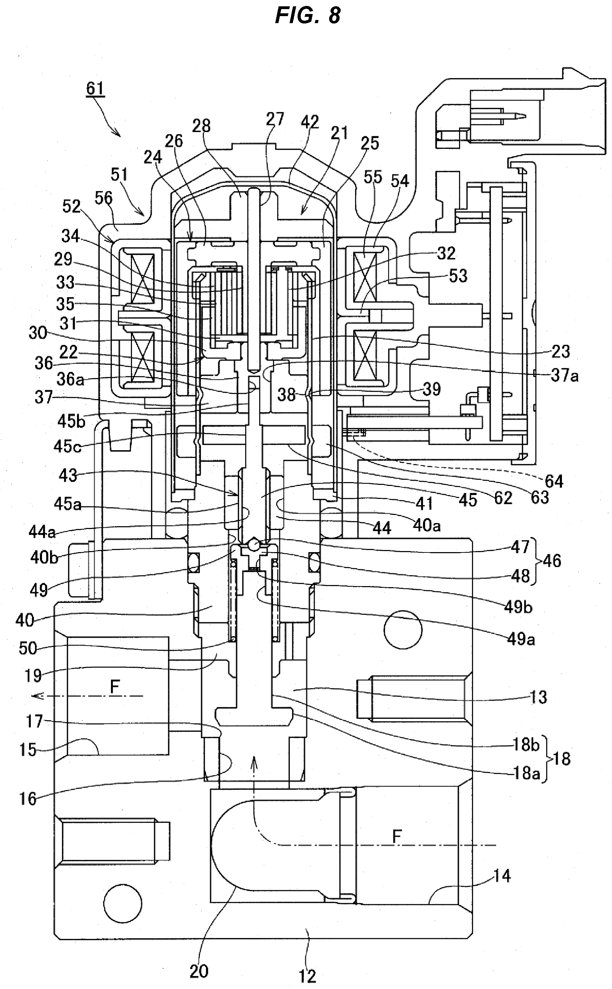

A description will be given of an electrically operated valve according to a second embodiment of the present invention with reference to Figs. 5 to 8. In the description of the present embodiment, the same reference numerals are attached to the same structures as those in the first embodiment, a duplicated description will be omitted, and the description is given with a focus on different points.

As shown in Figs. 5 to 8, an electrically operated valve 61 according to the present embodiment is provided with the assembly (the gear device assembly) 21 including the gear device 22 in the same manner as the first embodiment, however, is configured to be provided with a rotation detecting means which detects the rotation of the screw drive member 45 with the use of a space between the gear device 22 and the transmission mechanism 43. Because of the provision of the rotation detecting means, a dimension in the up-and-down direction of the gear case 23 is longer in the present embodiment than the first embodiment, and the gear case 23 has such a shape as to elongate a peripheral wall downward.

In particular, the rotation detecting means is constructed by a discoid driving permanent magnet 62 which is fixed to the screw drive member 45 in such a manner as to be arranged in a lower end part of an inner part of the gear case 23, and a ring-shaped driven permanent magnet 63 which is arranged in an outer side of an outer peripheral surface of a lower part of the gear case 23, and a magnetic sensor 64 which detects a rotation of the driven permanent magnet 63.

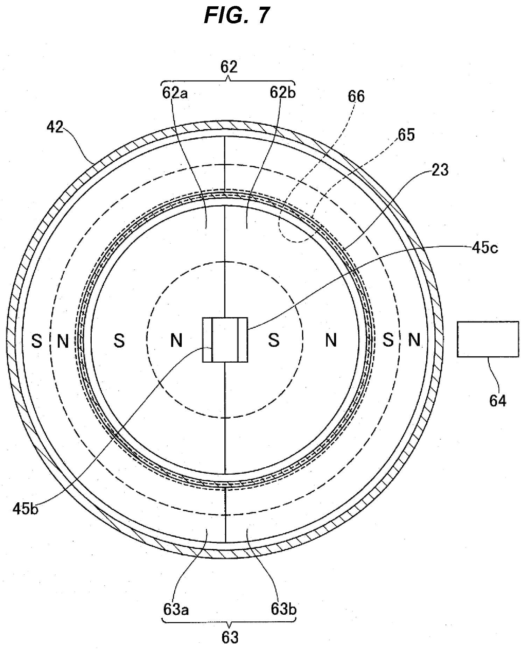

The driving permanent magnet 62 horizontally expands outward like a flange from an outer peripheral surface of the screw drive member 45, and rotates together with the screw drive member 45. Further, the driving permanent magnet 62 has semi-circular parts 62a and 62b which are zoned by a diameter (refer to Fig. 7). One north pole and one south pole are sequentially arranged from an inner side toward an outer side in a diametrical direction in one semi-circular part 62a, and one south pole and one north pole are sequentially arranged from an inner side toward an outer side in a diametrical direction in the other semi-circular part 62b. With regard to the screw drive member 45, the present embodiment is provided with a shaft part 45c for fixing the driving permanent magnet 62 between the male screw part 45a and the plate-like part 45b. Thus, the screw drive member 45 according to the present embodiment has a longer total length in the up-and-down direction than that according to the first embodiment.

The driven permanent magnet 63 is connected to the driving permanent magnet 62 by a magnetic coupling which performs a torque transmission with the used of a suction force of a permanent magnet, and is exposed to a rotative force from the driving permanent magnet 62 to rotate together with the driving permanent magnet 62. For this purpose, the driven permanent magnet 63 has the following structure.

The driven permanent magnet 63 has an annular (ring) shape, and has semi-circular parts 63a and 63b which are zoned by a diameter. One north pole and one south pole are sequentially arranged from an inner side toward an outer side in a diametrical direction in one semi-circular part 63a, and one south pole and one north pole are sequentially arranged from an inner side toward an outer side in a diametrical direction in the other semi-circular part 63b. Further, the north pole of the driving permanent magnet 62 and the south pole of the driven permanent magnet 63 face each other with holding a peripheral wall of the gear case 23 therebetween, and the south pole of the driving permanent magnet 62 and the north pole of the driven permanent magnet 63 face each other with holding the peripheral wall of the gear case 23 therebetween. Thus, the magnetic coupling is formed between the driving permanent magnet 62 and the driven permanent magnet 63.

Further, in order to rotatably and slidably support the driven permanent magnet 63 to the outer peripheral surface of the gear case 23, the following support structure is provided.

A ring-shaped protruding part 65 obtained by protruding the peripheral wall of the gear 3 outward is formed in a lower end part of the peripheral wall (the protruding part extends over an entire periphery of the peripheral wall of the gear case 23). Further, a concave groove 66 to which the protruding part 65 can be fitted is formed in an inner peripheral surface of the driven permanent magnet 63 (the concave groove extends over an entire peripheral of an inner peripheral surface of the driven permanent magnet 63). Owing to the protruding part 65 and the concave groove 66, the driven permanent manet 63 can be supported to the outer peripheral surface of the gear case 23 so as to be slidable and rotatable without dropping out (for example, dropping downward) from the gear case 23.

The driving permanent magnet 62 fixed to the screw drive member 45 moves in the up-and-down direction while rotating together with the screw drive member 45 in association with the vertical motion of the screw drive member 45 (the opening and closing motion of the valve). However, by making the dimension in the up-and-down direction of the driven permanent magnet 63 larger than the driving permanent magnet 62, the driving permanent magnet 62 does not deflect from a range in the up-and-down direction of the driven permanent magnet 63 (a state of facing the driven permanent magnet 63) even when the driving permanent magnet 62 moves up and down, and the magnetic coupling between the driving permanent magnet 62 and the driven permanent magnet 63 is not cancelled.

The magnetic sensor 64 is a rotation angle sensor which outputs a signal corresponding to an angle of rotation of a magnetic field, and is arranged in an outer side of the can 42 in such a manner as to face the outer peripheral surface of the driven permanent magnet 63 in the diametrical direction with holding the peripheral wall of the can 42 therebetween. The magnetic sensor 64 detects a magnetism of the driven permanent magnet 63, and outputs a signal corresponding to an angle of rotation of the driven permanent magnet 63. Thus, it is possible to detect a rotational displacement of the screw drive member 45. According to the present embodiment, it is possible to more precisely detect an opening degree of the valve (a distance between the valve body 18 and the valve seat 17).

The other structures and motions of the electrically operated valve 61 according to the present embodiment are the same as those of the electrically operated valve 11 according to the first embodiment.

### REFERENCE SIGNS LIST

A center axis (axis of rotation of rotor)
F flow of refrigerant
11, 61 electrically operated valve
12 valve main body
13 valve chamber
14 inflow pipe (first flow passage)
15 outflow pipe (second flow passage)
16 orifice
17 valve seat
18 valve body
18a valve body main body part
18b valve shaft part
19 valve body support member
20 strainer
21 gear device assembly (assembly)
22 gear device (paradox planetary gear speed reduction mechanism)
23 gear case
24 rotor
25 rotor member
26 sun gear member
27 center shaft
28 support member
29 sun gear
30 output gear
31 carrier
32 shaft
33 planetary gear
34 ring gear (internal tooth fixing gear)
35 internal tooth gear
36 output shaft
36a fitting groove
37 output shaft guide member (guide part)
37a through hole of output shaft guide member
38 convex part (engagement convex part)
39 concave part (engagement concave part)
40 connection member
40a large-diameter hole
40b small-diameter hole
41 base plate
42 can
43 transmission mechanism (feed screw mechanism)
44 bearing member
44a female screw part
45 screw drive member
45a male screw part
45b plate-like part
45c shaft part (shaft part for fixing driving permanent magnet)
46 ball-like joint
47 ball
48 ball receiving seat
49 spring receiving member
49a fitting hole (lower surface fitting hole)
49b fitting hole (upper surface fitting hole)
50 compression coil spring
51 electric motor
52 stator
53 yoke
54 bobbin
55 coil
56 molded cover
62 driving permanent magnet
62a, 62b, 63a, 63b semi-circular part
63 driven permanent magnet
64 magnetic sensor
65 protruding part
66 concave groove

## Claims

1. An electrically operated valve comprising:
a valve main body which has a valve chamber in an inner part;
a first flow passage which communicates with the valve chamber;
a second flow passage which communicates with the valve chamber;
an orifice which is formed between the first flow passage and the second flow passage;
a valve body which changes an opening degree of the orifice by moving forward and backward with respect to the orifice;
a rotor which constructs an electric motor driving the valve body;
a gear device which reduces the rotation of the rotor;
an output shaft which outputs the rotation reduced by the gear device;
a transmission mechanism which converts the rotation of the output shaft into a linear motion to transmit to the valve body;
a tubular gear case which receives the gear device; and
a guide part which rotatably supports the output shaft,
wherein the output shaft, the guide part and the gear device are supported to the gear case.

2. The electrically operated valve according to claim 1, wherein the gear device, the gear case, the output shaft, the guide part and the rotor are unitized as a gear device assembly.

3. The electrically operated valve according to claim 1 or 2, wherein an engagement concave part is disposed in one of an inner peripheral surface of the gear case and an outer peripheral surface of the guide part, and
wherein an engagement convex part fitted into the engagement concave part to block the rotation of the guide part is disposed in the other of the inner peripheral surface of the gear case and the outer peripheral surface of the guide part.

4. The electrically operated valve according to claim 1 or 2, wherein the guide part is disposed within the gear case by an insert molding.

5. The electrically operated valve according to claim 1 or 2, wherein the transmission mechanism comprises:
a screw drive member which rotates due to the rotation of the output shaft, is provided in such a manner as to be movable forward and backward with respect to the output shaft and has a male screw part on an outer peripheral surface; and
a bearing member which has a female screw part screwed into the male screw part of the screw drive member, and
wherein the electrically operated valve further comprises:
a driving permanent magnet which is received in a lower part of the gear case, is fixed to the screw drive member and rotates together with the screw drive member;
a driven permanent magnet which is connected to the driving permanent magnet by a magnetic coupling and is arranged in an outer side of a lower part outer peripheral surface of the gear case such that a rotative force is transmitted from the driving permanent magnet; and
a magnetic sensor which detects the rotation of the driven permanent magnet.
